# EUROPÄISCHE PATENTANMELDUNG

(11) **EP 2 902 718 A1**
(43) Veröffentlichungstag der Anmeldung: **05.08.2015**
(21) Anmeldenummer: 14197533.4
(22) Anmeldetag: 12.12.2014
(51) Int. Cl.: F24F 7/013, F24F 11/00, F24F 12/00

(54) **Verfahren und Vorrichtung zur Abluftsteuerung in Feuchträumen**

(30) Priorität: 07.01.2014 DE 102014100109
(71) Anmelder: LTM GmbH, 58540 Meinerzhagen (DE)
(72) Erfinder: Grieb, Klaus, 58119 Hagen (DE); Stahlschmidt, Ronald, 58511 Lüdenscheid (DE)
(74) Vertreter: Raunecker, Klaus Peter

(57) **Zusammenfassung**

Die Erfindung betrifft ein Verfahren zur Lüftungssteuerung in Feuchträumen, wobei ein Ventilator eines Lüftungssystems in einem Abluftmodus betreibbar ist, und wobei der Ventilator, nachdem er im Abluftmodus betrieben wurde, zusätzlich in einem alternierenden Modus betrieben wird. Ferner betrifft die Erfindung eine Lüftungssteuerung bzw. ein Erweiterungsmodul für eine Lüftungssteuerung zur Umsetzung des erfindungsgemäßen Verfahrens.

## Beschreibung

Die Erfindung betrifft ein Verfahren zur Abluftsteuerung in Feuchträumen sowie eine Lüftungssteuerung sowie ein Erweiterungsmodul für eine Lüftungssteuerung zur Anwendung des Verfahrens.

Feuchträume wie beispielsweise Bäder oder WCs werden nach dem Stand der Technik und insbesondere aufgrund geltender Normen und Richtlinien für Lüftungsanlagen bisher lüftungstechnisch gesondert behandelt. Dabei soll prinzipiell sichergestellt werden, dass keine belastete Luft aus dem Feuchtraum in angrenzende Wohnräume überströmt und dort eventuell eine Geruchsbelästigung verursacht. Aus diesem Grund sind bislang lediglich Systeme bekannt, welche bei von außen durch eine Lüftungsöffnung einströmender Frischluft ein gleichzeitiges Abführen der bereits im Feuchtraum vorhandenen Luft in den Außenbereich - ohne weitere Räume zu passieren - bewirken. Damit ergeben sich lüftungs- und insbesondere installationstechnisch erhebliche Einschränkungen für Feuchträume.

Es ist daher die Aufgabe der vorliegenden Erfindung, ein Verfahren und eine Vorrichtung anzugeben, welche lüftungstechnisch neue Möglichkeiten für Feuchträume eröffnen.

Diese Aufgabe wird durch das Verfahren mit den Merkmalen des Anspruchs 1 und die Vorrichtungen mit den Merkmalen der Ansprüche 10 und 11 gelöst. Die Unteransprüche beschreiben bevorzugte Ausführungsformen des erfindungsgemäßen Verfahrens.

Das erfindungsgemäße Verfahren zur Lüftungssteuerung in Feuchträumen zeichnet sich dadurch aus, dass es von einem Abluftmodus in einen alternierenden Modus übergehen kann. Im Abluftmodus wird der Ventilator des Lüftungssystems als reiner Abluftventilator betrieben. Das heißt, dass der Ventilator im Abluftmodus in diejenige Richtung dreht, in welcher die Rauminnenluft nach außen transportiert wird. Der Abluftmodus des Ventilators kann dabei so gewählt sein, dass ein bestimmtes Volumen an Luft in einer bestimmten Zeit, insbesondere zwischen 50 m³/h und 130 m³/h, nach außen befördert werden kann. Nach dem Betrieb im Abluftmodus wird der Ventilator, bevorzugt nach einer gewissen Nachlaufzeit, insbesondere nach 2,5 oder 5 Minuten, in denen mindestens 5 m³ Luft, insbesondere 20 m³ Luft nach außen befördert wurden, in den alternierenden Modus umgeschaltet.

Der alternierende Modus kann dabei beispielsweise derart ausgebildet sein, dass ein Ventilator für eine bestimmte Zeit, insbesondere 1 Minute, in eine bestimmte Richtung dreht. Anschließend wird die Drehrichtung desselben Ventilators wiederum für eine bestimmte Zeit, insbesondere 1 Minute, umgekehrt. So wird durch nur eine Lüftungsöffnung verbrauchte Raumluft nach außen und Frischluft nach innen befördert. Dadurch wird es möglich, einem Feuchtraum gezielt und unmittelbar Frischluft zuzuführen. Die Erfindung macht sich dabei die Erkenntnis zunutze, dass auch nach geltenden Vorschriften Feuchträume nach einem entsprechenden Betrieb eines Abluftventilators wie oben ausgeführt, als Zulufträume angesehen werden können. Dies wird insbesondere dadurch erkennbar, dass nach den derzeit geltenden Richtlinien Zuluft, welche durch eventuelle Schächte oder sonstige Öffnung bei Stillstand eines reinen Abluftventilators in den Feuchtraum gelangt, toleriert wird.

Für beide Modi ist es denkbar, in einem strömungstechnisch mit dem Feuchtraum in Verbindung stehenden Raum derselben Wohneinheit einen weiteren Ventilator zeitlich synchronisiert, jedoch gegenläufig zu betreiben. Mit anderen Worten kann während des Abluftmodus im Feuchtraum beispielsweise in einem angrenzenden Flur oder auch in einem anderen, nicht unmittelbar angrenzenden Raum, ein weiterer Ventilator im Zuluftmodus betrieben werden, so dass ein Überströmen von Luft aus angrenzenden Räumen in den Feuchtraum erleichtert wird. Entsprechendes gilt für den alternierenden Modus.

Dabei kann das Lüftungssystem eine Wärmerückgewinnungseinheit aufweisen. Hierzu kann die Wärmerückgewinnungseinheit insbesondere mindestens einen Wärmespeicher enthalten, welcher zunächst durch den vergleichsweise warmen Abluftstrom erwärmt wird. Nach dem Umschalten auf den Zuluftbetrieb strömt die kühlere Außenluft an dem Wärmespeicher vorbei bzw. durch diesen hindurch und erwärmt sich, so dass sie den Feuchtraum vorgewärmt erreicht. Im Ergebnis kann so eine Zuführung von Frischluft bei insgesamt verringertem lüftungsbedingten Wärmeverlust des Gebäudes erreicht werden.

In einer bevorzugten Ausführungsform des Verfahrens kann der Abluftmodus automatisch aktiviert und/oder deaktiviert werden. Hierzu kann beispielsweise ein Bewegungsmelder und/oder ein Sensor, welcher insbesondere die Luftfeuchtigkeit messen kann, eingesetzt werden. Auch Geruchssensoren können hier vorteilhaft zum Einsatz kommen. Weiterhin kann der automatische Abluftmodus auch programmierbar ausgebildet sein, so dass zu mindestens einer bestimmten Uhrzeit der Ventilator automatisch nach einem Betrieb im Abluftmodus in den alternierenden Modus übergeht.

Ebenfalls denkbar ist, dass der Abluftmodus manuell aktiviert bzw. deaktiviert werden kann. Beispielsweise kann ein Schalter, insbesondere ein Lichtschalter oder ein separater Taster betätigt werden, welcher den Ventilator im Abluftmodus aktiviert. Bei einer erneuten Betätigung des Schalters wird der Abluftmodus deaktiviert bzw. geht der Ventilator wieder in den alternierenden Modus.

Unter einer "Deaktivierung" des Abluftmodus ist in diesem Zusammenhang nicht etwa das unmittelbare und sofortige Abschalten des Ventilators zu verstehen. Vielmehr führt eine Deaktivierung des Abluftmodus lediglich dazu, dass das System in einen Zustand versetzt wird, in welchem es den Ventilator nach Ablauf einer gewissen Mindestlaufzeit abschaltet. Somit kann die erforderliche Pflichtspülung des Feuchtraumes sichergestellt werden.

Bevorzugt wird der Abluftmodus manuell aktiviert und nachfolgend automatisch deaktiviert. So kann der Abluftmodus während oder nach einem Aufenthalt in einem Feuchtraum, mittels beispielsweise eines Schalters oder Tasters, aktiviert werden. In diesem Fall kann beispielsweise durch die Steuerung des Lüftungssystems sichergestellt werden, dass der Ventilator den Abluftmodus nach Verstreichen der Mindestlaufzeit beendet. Die eingestellte Mindestlaufzeit stellt dabei sicher, dass ein hinreichend großes Luftvolumen wie beispielsweise 5 m³ nach außen befördert wird, so dass der Raum nach Ablauf der Mindestlaufzeit lüftungstechnisch als Zuluftraum angesehen werden kann und ein alternierender Betrieb des Ventilators erfolgen kann.

Im Fall einer manuell möglichen Deaktivierung des Abluftmodus kann das Fördern des genannten Luftvolumens nach außen durch die Einstellung einer entsprechenden Nachlaufzeit sichergestellt werden.

Weiterhin von Vorteil ist es, wenn der Abluftmodus anlaufverzögert aktiviert wird, besonders dann, wenn der Schalter beispielsweise ein Lichtschalter ist und der Abluftmodus erst nach Ausschalten des Lichtschalters zeitverzögert aktiviert werden soll. So kann gewährleistet werden, dass der Aufenthalt in einem Feuchtraum, beispielsweise ein Badezimmer, nicht durch eine unangenehme Geräuschkulisse gestört wird.

Insbesondere sind 3 unterschiedliche Programme für die Ansteuerung des Ventilators denkbar:

### Programm A:

In diesem Programm erfolgt eine Aktivierung des Ventilators mittels des Lichtschalters. Sobald das Licht angeschaltet wird, schaltet der Ventilator - ggf. anlaufverzögert - in den Abluftmodus. Nach Abschalten des Lichtes schaltet der Ventilator nach Ablauf der Nachlaufzeit in den alternierenden Betrieb.

### Programm B:

Auch hier erfolgt die Aktivierung mittels des Lichtschalters. In diesem Fall verändert der Ventilator sein Betriebsverhalten beim Einschalten des Lichtes nicht. Nach dem Abschalten des Lichtes schaltet der Ventilator für die voreingestellte Nachlaufzeit in den Abluftmodus.

### Programm C:

Hier erfolgt die Aktivierung mittels eines Tasters. Der Ventilator schaltet nach Betätigen des Tasters in den Abluftmodus. Nach Ablauf der Nachlaufzeit bzw. der Mindestlaufzeit schaltet der Ventilator in den alternierenden Modus.

Die Programme A) und B) können einen automatischen Programmabbruch beinhalten, sofern der Schaltimpuls innerhalb der Vorlaufzeit des Ventilators ein zweites Mal durchgeführt wird. Die Anlage läuft dann ohne Umschaltung im alternierenden Modus durch.

Das erfindungsgemäße Verfahren kann in vorteilhafter Weise mittels eines Erweiterungsmoduls zur intelligenten Ansteuerung eines Ventilators im Feuchtraum in Kombination mit einer Lüftungssteuerung nach dem Stand der Technik umgesetzt werden. Derartige Lüftungssteuerungen werden bereits von der Anmelderin insbesondere unter den Bezeichnungen LA 11 und AC 200-50 angeboten. Auch eine unmittelbare Implementierung des Verfahrens in einer integrierten Lüftungssteuerung ist denkbar.

Damit lassen sich die oben erwähnten unterschiedlichen Programmmöglichkeiten zur automatischen Aktivierung des Ventilators im Feuchtraum für den zeitlich begrenzten Abluftbetrieb realisieren. Insbesondere wird so auch der oben skizzierte synchronisierte Betrieb mit weiteren Ventilatoren eines Lüftungssystems möglich.

Im Abluftmodus kann der im Feuchtraum eingesetzte Ventilator insbesondere von der Lüftungssteuerung abgekoppelt werden und als reiner Abluftventilator betrieben werden.

Die Stromversorgung des Ventilators und der Anschluss der Schalter/Taster können unmittelbar an dem Erweiterungsmodul erfolgen.

Zur Umsetzung des erfindungsgemäßen Verfahrens kann ferner in einer vorteilhaften Variante der Erfindung der seitens der Anmelderin unter der Handelsbezeichnung "Thermo Lüfter" angebotene Lüfter zur Anwendung kommen.

## Patentansprüche

1. Verfahren zur Lüftungssteuerung in Feuchträumen, wobei ein Ventilator eines Lüftungssystems in einem Abluftmodus betreibbar ist,
**dadurch gekennzeichnet, dass**
der Ventilator, nachdem er im Abluftmodus betrieben wurde, zusätzlich in einem alternierenden Modus betrieben wird.

2. Verfahren nach Anspruch 1,
**dadurch gekennzeichnet, dass**
der alternierende Modus erst dann aktiviert wird, nachdem ein definiertes Luftvolumen durch den Abluftmodus nach außen befördert wurde.

3. Verfahren nach Anspruch 2,
**dadurch gekennzeichnet, dass** es sich bei dem definierten Luftvolumen mindestens um 5 m³ Luft handelt.

4. Verfahren nach einem der vorangegangenen Ansprüche,
**dadurch gekennzeichnet, dass**
das Lüftungsverfahren im alternierenden Modus eine Wärmerückgewinnung beinhaltet, wobei die Zuluft sowie die Abluft durch nur eine Lüftungsöffnung geleitet wird.

5. Verfahren nach einem der Ansprüche 1 bis 4,
**dadurch gekennzeichnet, dass**
der Abluftmodus automatisch aktiviert und/oder deaktiviert wird.

6. Verfahren nach einem der Ansprüche 1 bis 4,
**dadurch gekennzeichnet, dass**
der Abluftmodus manuell aktiviert und/oder deaktiviert wird.

7. Verfahren nach einem der Ansprüche 1 bis 4,
**dadurch gekennzeichnet, dass**
der Abluftmodus manuell aktiviert und automatisch deaktiviert werden kann.

8. Verfahren nach einem der vorangegangenen Ansprüche,
**dadurch gekennzeichnet, dass**
der Abluftmodus einschaltverzögert ausgeführt ist.

9. Verfahren nach einem der vorangegangenen Ansprüche,
**dadurch gekennzeichnet, dass**
der Abluftmodus eine Nachlaufzeit aufweist.

10. Steuerung eines Lüftungssystems, wobei die Steuerung geeignet ist, einen Ventilator in einem Feuchtraum entsprechend einem Verfahren nach einem oder mehreren der Ansprüche 1-9 zu steuern.

11. Erweiterungsmodul für eine Steuerung eines Lüftungssystems, wobei das Erweiterungsmodul geeignet ist, einen Ventilator in einem Feuchtraum entsprechend einem Verfahren nach einem oder mehreren der Ansprüche 1-9 zu steuern.
